# EUROPÄISCHE PATENTANMELDUNG

(11) **EP 3 026 381 A1**
(43) Veröffentlichungstag der Anmeldung: **01.06.2016**
(21) Anmeldenummer: 15003097.1
(22) Anmeldetag: 29.10.2015
(51) Int. Cl.: F25J 3/04

(54) **VERFAHREN UND VORRICHTUNG ZUM AUSSCHLEUSEN SCHWERER ALS SAUER- STOFF FLÜCHTIGER KOMPONENTEN AUS EINER LUFTZERLEGUNGSANLAGE**

(30) Priorität: 27.11.2014 EP 14004007
(71) Anmelder: Linde Aktiengesellschaft, 80331 München (DE)
(72) Erfinder: Kirchner, Lars, 01279 Dresden (DE)
(74) Vertreter: Imhof, Dietmar

(57) **Zusammenfassung**

Das Verfahren und die Vorrichtung dienen zum Ausschleusen schwerer als Sauerstoff flüchtiger Komponenten aus einer Luftzerlegungsanlage, die einen Hauptwärmetauscher (2), einen Nebenkondensator (9) und ein Zwei-Säulen-Destillationssäulen-System (5, 6) zur Stickstoff-Sauerstoff-Trennung enthält. Der Nebenkondensator (9) ist als Kondensator-Verdampfer ausgebildet und in einem Behälter (10) angeordnet. Ein Teil der Einsatzluft (1, 3, 8) wird in dem Hauptwärmetauscher (2) abgekühlt und in dem Nebenkondensator (9) mindestens teilweise verflüssigt. Eine erste Sauerstofffraktion (12) wird flüssig aus der Niederdrucksäule (6) abgezogen, in den Behälter (10) des Nebenkondensators (9) eingeleitet und dort mindestens teilweise verdampft. Ein Spülstrom (20) wird flüssig vom Boden des Behälters (10) entnommen und verworfen oder als Endprodukt abgezogen. Der Behälter (10) weist oberhalb des Nebenkondensators (9) einen Stoffaustauschabschnitt (19) auf, der mehr als einem theoretischen Boden und weniger als 10 theoretischen Böden entspricht.

## Beschreibung

Die Erfindung betrifft ein klassisches Nebenkondensatorverfahren gemäß dem Oberbegriff des Patentanspruchs 1.

Der Nebenkondensator ist als Kondensator-Verdampfer ausgebildet.

Als "Kondensator-Verdampfer" wird ein Wärmetauscher bezeichnet, in dem ein erster, kondensierender Fluidstrom in indirekten Wärmeaustausch mit einem zweiten, verdampfenden Fluidstrom tritt. Jeder Kondensator-Verdampfer weist einen Verflüssigungsraum und einen Verdampfungsraum auf, die aus Verflüssigungspassagen beziehungsweise Verdampfungspassagen bestehen. In dem Verflüssigungsraum wird die Kondensation (Verflüssigung) des ersten Fluidstroms durchgeführt, in dem Verdampfungsraum die Verdampfung des zweiten Fluidstroms. Verdampfungs- und Verflüssigungsraum werden durch Gruppen von Passagen gebildet, die untereinander in Wärmeaustauschbeziehung stehen.

Der Verdampfungsraum eines Kondensator-Verdampfers kann als Badverdampfer, Fallfilmverdampfer oder Forced-Flow-Verdampfer ausgebildet sein. Ein Nebenkondensator ist regelmäßig als Badverdampfer (Thermosiphon-Verdampfer) ausgebildet der mit einem Teil der Einsatzluft beheizt wird.

In dem flüssigen Sauerstoffprodukt der Niederdrucksäule (der "ersten Sauerstofffraktion") sammeln sich auch Komponenten der Luft, die schwerer als Sauerstoff flüchtig sind. Diese bleiben bei der Verdampfung im Nebenkondensator in der Flüssigkeit zurück. Neben dem verdampften Produkt (der "zweiten Sauerstofffraktion") muss daher auch ein Spülstrom (die "dritte Sauerstofffraktion") entfernt werden, damit sich die Schwererflüchtigen nicht anreichern. Diese Spülung kann kontinuierlich oder diskontinuierlich erfolgen und beträgt beispielsweise 0,2 mol-% der Einsatzluftmenge.

Verfahren der eingangs genannten Art und entsprechende Vorrichtungen sind bekannt aus DE 4327311 A1 oder WO 2010017968 A2 (= US 20110214453 A1).

"Aus dem Destillationssäulen-System zur Stickstoff-Sauerstoff-Trennung entfernen" bedeutet hier, dass der entsprechende Spülstrom nicht in eine der Trennsäulen des Destillationssäulen-Systems zur Stickstoff-Sauerstoff-Trennung eingeführt wird. Der Spülstrom wird bei der Erfindung stattdessen entweder verworfen, also in die Atmosphäre abgelassen (gegebenenfalls nach externer Verdampfung), oder als Endprodukt abgezogen, indem er beispielsweise als Flüssigprodukt entnommen (wie in DE 4327311 A1) oder einem anderen Flüssigproduktstrom (wie in WO 2010017968 A2 = US 20110214453 A1) oder einem Gasproduktstrom zugeführt wird.

Der Erfindung liegt die Aufgabe zugrunde, die Ausbeute an gasförmigem Sauerstoffprodukt in Form der zweiten Sauerstofffraktion zu erhöhen.

Bei der Ausbeute-Erhöhung denkt der Fachmann zunächst daran, die Trennwirkung von Hochdrucksäule und/oder Niederdrucksäule zu erhöhen, indem Parameter wie Druck, Rücklaufverhältnis und/oder Zahl der theoretischen Böden verändert werden. Auch der Einsatz einer dritten Säule zur Stickstoff-Sauerstofftrennung ist möglich.

Die Erfindung setzt dagegen beim Nebenkondensator an.

Die Aufgabe wird durch die Gesamtheit der Merkmale des Patentanspruchs 1 gelöst.

In den ohnehin vorhandenen Behälter des Nebenkondensators wird bei der Erfindung ein kurzer Stoffaustauschabschnitt eingebaut, der beispielsweise 2 bis 8, insbesondere 3 bis 5 theoretische Böden aufweist. Dadurch wird - als Nebeneffekt - eine geringfügige Erhöhung der Reinheit der zweiten Sauerstofffraktion bewirkt, die oberhalb des Stoffaustauschabschnitts entnommen wird. Viel wichtiger ist aber die höhere Konzentration an Krypton, Xenon und den anderen schwerer als Sauerstoff flüchtigen Luftbestandteilen in der dritten Sauerstofffraktion, die am Sumpf abgezogen wird. Dadurch kann bei der Erfindung mit einem Liter Spülstrom eine erhöhte Menge an Schwererflüchtigen abgezogen werden als bisher. Umgekehrt reicht bei gleicher Spülwirkung eine geringere Spülmenge (dritte Sauerstofffraktion) aus. Die entsprechende Sauerstoffmenge steht zusätzlich als Produkt zur Verfügung und erhöht damit die Sauerstoffausbeute des Systems.

Der Stoffaustauschabschnitt kann durch jede Art von Stoffaustauschelementen gebildet werden, konventionelle Böden (zum Beispiel Siebböden), geordnete Packung (structured packing) oder ungeordnete Füllkörper (non-structured packing).

Im Rahmen der Erfindung können alle im einleitenden Teil erwähnten Möglichkeiten der weiteren Behandlung des Spülstroms genutzt werden.

Im Nachhinein betrachtet scheint in FR 2250971 A etwas strukturell Ähnliches gezeigt zu sein. Das System zielt aber auf eine Reinheitserhöhung ab, nicht auf eine Erhöhung der Ausbeute. Ein Nebenkondensator wird zur einer echten Rektifiziersäule ausgebaut, die unreinen Sauerstoff (95 mol-%) zur reinem Sauerstoff (99,5 % im Sumpf) macht. Die Flüssigkeit vom Sumpf dieser Rektifiziersäule wird nicht aus dem Destillationssäulen-System zur Stickstoff-Sauerstoff-Trennung entfernt, sondern in dessen Unterkühlungs-Gegenströmer eingeführt.

Besonders günstig ist es, die dritte Sauerstofffraktion durch eine Pumpe flüssig auf einen erhöhten Druck zu bringen und unter diesem erhöhten Druck in einem externen Verdampfer zu verdampfen, wobei die Verdampfung in dem externen Verdampfer insbesondere im indirekten Wärmeaustausch mit Luft oder mit einem Wasserbad erfolgt. Anschließend wird die dritte Sauerstofffraktion als gasförmigen Produkt abgezogen, entweder separat oder vermisch mit einem anderen gasförmigen Sauerstoffproduktstrom.

Vorzugsweise wird der Spülstrom gasförmig in die Atmosphäre abgelassen oder als gasförmiges Produkt abgezogen. Im letzteren Fall kann der Spülstrom beispielsweise flüssig in einen warmen gasförmigen Sauerstoffproduktstrom eingespeist und darin verdampft werden.

Die erste Sauerstofffraktion kann aufgeteilt oberhalb und unterhalb des Stoffaustauschabschnitts in den Behälter des Nebenkondensators eingeleitet werden, oder auch nur oberhalb.

Vorzugsweise weist die erste Sauerstofffraktion eine Sauerstoffreinheit von mehr als 89 mol-% auf, vorzugsweise mehr als 93,0 mol-%, beispielsweise mehr als 95,0 mol-% oder mehr als 99,0 mol-%.

Die zweite Sauerstofffraktion weist eine Sauerstoffreinheit auf, die geringfügig höher als die Sauerstoffreinheit der ersten Sauerstofffraktion ist. In einem konkreten Beispiel wird die Sauerstoffreinheit in dem Stoffaustauschabschnitt des Nebenkondensators von 99,72 mol-% in der ersten Sauerstofffraktion auf 99,77 mol-% in der zweiten Sauerstofffraktion erhöht.

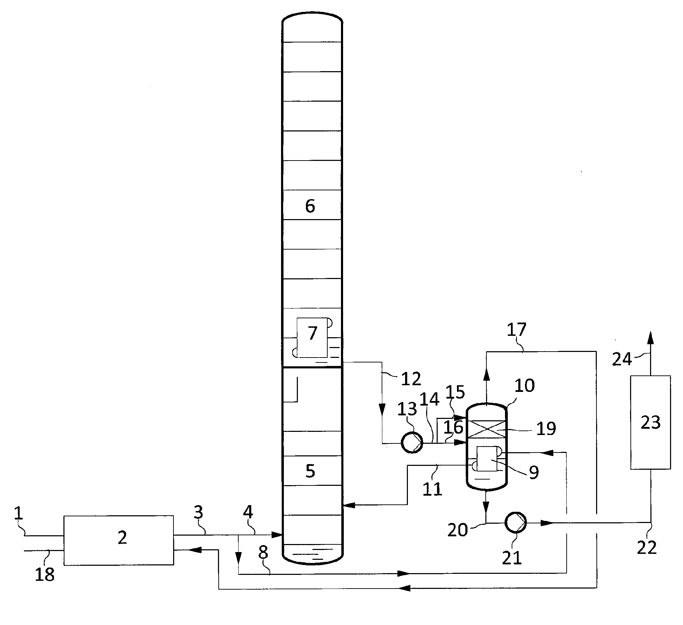

Die Erfindung sowie weitere Einzelheiten der Erfindung werden im Folgenden anhand eines in der Zeichnung schematisch dargestellten Ausführungsbeispiels näher erläutert.

Verdichtete, vorgekühlte und gereinigte Luft 1 wird in einem Hauptwärmetauscher 2 abgekühlt. Die abgekühlte Luft wird in einen ersten Einsatzluftstrom 4 und einen zweiten Einsatzluftstrom 8 aufgeteilt. Der erste Einsatzluftstrom 4 wird im Wesentlichen gasförmig in die Hochdrucksäule 5 eines Destillationssäulen-Systems zur Stickstoff-Sauerstoff-Trennung eingeleitet, das außerdem eine Niederdrucksäule 6 und einen Hauptkondensator 7 aufweist.

Der zweite Einsatzluftstrom 8 wird in den Verflüssigungsraum eines Nebenkondensators 9 eingeleitet, der als Kondensator-Verdampfer, insbesondere als Badverdampfer ausgebildet und in einem Behälter 10 angeordnet ist. In dem Nebenkondensator wird der zweite Einsatzluftstrom 8 vollständig oder im Wesentlichen vollständig verflüssigt. Der verflüssigte zweite Einsatzluftstrom 11 wird in das Destillationssäulen-System zur Stickstoff-Sauerstoff-Trennung, insbesondere in die Hochdrucksäule 5 eingeleitet.

Die für eine Linde-Doppelsäule üblichen und dem Fachmann geläufigen Verbindungen zwischen Hochdrucksäule 5 und Niederdrucksäule 6 sind in der schematischen Zeichnung nicht dargestellt. Im Sumpf der Niederdrucksäule 6 fällt flüssiger Sauerstoff einer Reinheit von beispielsweise 99,5 mol-% an. Dieser wird als erste Sauerstofffraktion 12 aus dem Sumpf der Niederdrucksäule 6 abgezogen, gegebenenfalls in einer Pumpe 13 auf einen erhöhten Druck gebracht und anschließend ganz oder teilweise über die Leitungen 14 und 15 auf den Kopf des Behälters 10 des Nebenkondensators 9 aufgegeben. Ein Teil 16 kann auch unmittelbar über dem Sumpf des Behälters 10 eingespeist werden. Falls das Sauerstoffprodukt unter Niederdrucksäulendruck (gegebenenfalls plus hydrostatischem Potenzial zwischen Niederdrucksäulensumpf und Nebenkondensator) gewonnen werden soll, kann die Pumpe 13 auch weggelassen werden.

Erfindungsgemäß ist in dem Behälter oberhalb des Wärmetauscherblocks des Nebenkondensators 9 ein Stoffaustauschabschnitt 19 angeordnet, in dem herabfließende Flüssigkeit aus Leitung 15 und im Nebenkondensator erzeugtes Gas in Gegenstrom-Stoffaustausch treten.

Vom Kopf des Behälters 10 wird das gasförmige Sauerstoffprodukt, die zweite Sauerstofffraktion 17 abgezogen, im Hauptwärmetauscher 2 angewärmt und über die Produktleitung 18 abgegeben. Die zweite Sauerstofffraktion weist in dem Ausführungsbeispiel eine gegenüber der Niederdrucksäule leicht erhöhte Sauerstoffreinheit von 99,8 % auf.

Wichtiger ist, dass sich der Gehalt an Schwererflüchtigen in der flüssig abgezogenen dritten Sauerstofffraktion, dem Spülstrom 20 gegenüber der ersten Sauerstofffraktion 12 erhöht hat, beispielsweise um den Faktor 5 bis 10. Die genaue Anreicherung hängt von der Spülmenge und vom Verhältnis der Ströme 15 und 16 ab. Der Spülstrom 20 wird in dem Ausführungsbeispiel mit einer Pumpe 21 auf einen Druck von mindestens 51 bar gebracht, in einem Wasserbadverdampfer 23 total verdampft und über Leitung 24 in die Atmosphäre abgegeben. Die Spülleitung 20 kann kontinuierlich oder intermittierend betrieben werden.

## Patentansprüche

1. Verfahren zum Ausschleusen schwerer als Sauerstoff flüchtiger Komponenten aus einer Luftzerlegungsanlage, die einen Hauptwärmetauscher (2), einen Nebenkondensator (9) und ein Destillationssäulen-System zur Stickstoff-Sauerstoff-Trennung enthält, wobei der Nebenkondensator (9) als Kondensator-Verdampfer ausgebildet und in einem Behälter (10) angeordnet ist und das Destillationssäulen-System zur Stickstoff-Sauerstoff-Trennung mindestens eine Hochdrucksäule (5) und eine Niederdrucksäule (6) aufweist, und wobei bei dem Verfahren
- ein erster Einsatzluftstrom (1, 3, 4) in dem Hauptwärmetauscher (2) abgekühlt und in die Hochdrucksäule (5) eingeleitet wird,
- ein zweiter Einsatzluftstrom (1, 3, 8) in dem Hauptwärmetauscher (2) abgekühlt und in dem Nebenkondensator (9) mindestens teilweise verflüssigt wird,
- eine erste Sauerstofffraktion (12) flüssig aus der Niederdrucksäule (6) abgezogen und in den Behälter (10) des Nebenkondensators (9) eingeleitet wird,
- die Sumpfflüssigkeit des Behälters (10) des Nebenkondensators (9) mindestens teilweise verdampft wird,
- vom Kopf des Behälters (10) des Nebenkondensators (9) eine zweite Sauerstofffraktion (17) gasförmig abgezogen wird,
- die zweite Sauerstofffraktion (17) in dem Hauptwärmetauscher (2) angewärmt wird,
- eine dritte Sauerstofffraktion (20) mindestens zeitweise flüssig vom Boden des Behälters (10) als Spülstrom entnommen und aus dem Destillationssäulen-System zur Stickstoff-Sauerstoff-Trennung entfernt wird und
- der Spülstrom (20) mindestens einer der folgenden Behandlungen unterworfen wird:
- Verwerfen in die Umgebung,
- Abzug als Endprodukt,
**dadurch gekennzeichnet, dass**
- der Behälter (10) oberhalb des Nebenkondensators (9) einen Stoffaustauschabschnitt (19) aufweist, der mehr als einem theoretischen Boden und weniger als 10 theoretischen Böden entspricht und
- der Sauerstoffgehalt der dritten Sauerstofffraktion (20) geringer als die Sauerstoffreinheit der ersten Sauerstofffraktion ist.

2. Verfahren nach Anspruch 1, **dadurch gekennzeichnet, dass** die dritte Sauerstofffraktion (20) durch eine Pumpe (21) flüssig auf einen erhöhten Druck gebracht und unter diesem erhöhten Druck in einem externen Verdampfer (23) verdampft wird, wobei die Verdampfung in dem externen Verdampfer (23) insbesondere in indirektem Wärmeaustausch mit Luft oder mit einem Wasserbad erfolgt.

3. Verfahren nach Anspruch 1 oder 2, **dadurch gekennzeichnet, dass** die dritte Sauerstofffraktion gasförmig in die Atmosphäre abgelassen oder als gasförmiges Produkt abgezogen wird.

4. Verfahren nach einem der Ansprüche 1 bis 3, **dadurch gekennzeichnet, dass** mindestens ein Teil (15) der ersten Sauerstofffraktion (12) oberhalb des Stoffaustauschabschnitts (19) in den Behälter (10) des Nebenkondensators (9) eingeleitet wird.

5. Verfahren nach einem der Ansprüche 1 bis 4, **dadurch gekennzeichnet, dass** ein Teil (16) der ersten Sauerstofffraktion (12) unterhalb des Stoffaustauschabschnitts (19) in den Behälter (10) des Nebenkondensators (9) eingeleitet wird.

6. Verfahren nach einem der Ansprüche 1 bis 5, **dadurch gekennzeichnet, dass** die erste Sauerstofffraktion (12) einen Sauerstoffgehalt von mehr als 89,0 mol-%, insbesondere mehr als 99,0 mol-% aufweist.

7. Verfahren nach Anspruch 6, **dadurch gekennzeichnet, dass** die zweite Sauerstofffraktion (17) eine Sauerstoffreinheit aufweist, die höher als der Sauerstoffgehalt der ersten Sauerstofffraktion ist.

8. Luftzerlegungsanlage zum Durchführen des Verfahrens zum Ausschleusen schwerer als Sauerstoff flüchtiger Komponenten gemäß einem der Ansprüche 1 bis 7, mit einem Hauptwärmetauscher (2), einem Nebenkondensator (9) und einem Destillationssäulen-System zur Stickstoff-Sauerstoff-Trennung, wobei der Nebenkondensator (9) als Kondensator-Verdampfer ausgebildet und in einem Behälter (10) angeordnet ist und das Destillationssäulen-System zur Stickstoff-Sauerstoff-Trennung mindestens eine Hochdrucksäule (5) und eine Niederdrucksäule (6) aufweist, und mit
- Mitteln zum Abkühlen eines ersten Einsatzluftstroms (1,3,4) in dem Hauptwärmetauscher (2),
- Mitteln zum Einleiten des abgekühlten ersten Einsatzluftstroms (1,3,4) in die Hochdrucksäule (5),
- Mitteln zum Abkühlen eines zweiten Einsatzluftstroms (1, 3, 8) in dem Hauptwärmetauscher (2),
- Mitteln zum Einleiten des abgekühlten zweiten Einsatzluftstroms (1,3, 8) in den Verflüssigungsraum des Nebenkondensators (9),
- Mitteln zum Abziehen einer ersten Sauerstofffraktion (12) in flüssiger Form aus der Niederdrucksäule (6),
- Mitteln zum Einleiten der flüssigen ersten Sauerstofffraktion in den Behälter des Nebenkondensators (9),
- Mittel zum Einführen der Sumpfflüssigkeit des Behälters (10) in den Verdampfungsraum des Nebenkondensators (9),
- Mitteln zum Abziehen einer zweiten Sauerstofffraktion (17) in gasförmigem Zustand vom Kopf des Behälters (10) des Nebenkondensators (9),
- Mitteln zum Anwärmen der zweiten Sauerstofffraktion (17) in dem Hauptwärmetauscher (2),
- Mitteln zum Entnehmen einer dritten Sauerstofffraktion (20) in flüssigem Zustand als Spülstrom vom Boden des Behälters (10) und mit
- Mitteln zum Entfernen der dritten Sauerstofffraktion (20) aus dem Destillationssäulen-System zur Stickstoff-Sauerstoff-Trennung,
- die so ausgebildet sind, dass der Spülstrom (20) im Betrieb der Anlage mindestens zeitweise einer der folgenden Behandlungen unterworfen wird:
- Verwerfen in die Umgebung,
- Abzug als Endprodukt,
**dadurch gekennzeichnet, dass**
- der Behälter (10) oberhalb des Nebenkondensators (9) einen Stoffaustauschabschnitt (19) aufweist, der mehr als einem theoretischen Boden und weniger als 10 theoretischen Böden entspricht.
